# EUROPEAN PATENT APPLICATION

(11) **EP 2 698 185 A1**
(43) Date of publication of application: **19.02.2014**
(21) Application number: 12874555.1
(22) Date of filing: 25.05.2012
(51) Int. Cl.: A63F 13/06

(54) **GAME CONTROLLER**

(30) Priority: 20.04.2012 JP 2012097099
(71) Applicant: NINTENDO CO., LTD., Minami-ku Kyoto-shi Kyoto 601-8501 (JP)
(72) Inventor: TSUCHIYA, Hitoshi, (JP); KITANO, Yasuhisa, (JP)
(74) Representative: Lang, Johannes
(86) International application number: PCT/JP2012/003445
(87) International publication number: WO 2013/157052

(57) **Abstract**

A both-handed game controller having grips is provided. A stick is provided at each of an upper left position and an upper right position viewed from a front surface of the controller, so that a player is allowed to operate the sticks with his/her thumbs when the player holds the grips. A direction key and a plurality of first type operation buttons are provided at positions inside the sticks, so that the player is allowed to operate them with the thumbs. Further, a second type operation button is provided between the two sticks, and a third type operation button is provided between the direction key and the plurality of first type operation buttons. Further, fourth type operation buttons are provided at both ends of an upper surface of the controller, respectively.

## Description

### TECHNICAL FIELD

The present invention relates to a game controller, and more particularly, to a game controller operated with both hands.

### BACKGROUND ART

Conventionally, a game controller has been known, which is held and operated with both hands, and includes two sticks, a cross key, and a plurality of operation buttons.

### CITATION LIST

### [NON PATENT LITERATURE]

[NPL 1] "Instruction Manual for Classic Controller Pro", Nintendo Co., Ltd., August 1, 2009

### SUMMARY OF THE INVENTION

### PROBLEMS TO BE SOLVED BY THE INVENTION

The above-mentioned game controller having two analog sticks improves operability in a game. However, there is a case where the game controller is difficult to operate under a specific condition. For example, in a case where the two sticks are positioned near the center of the controller (to the front side relative to a cross key and ABXY buttons) and both the sticks are simultaneously tilted inward, since the space between the two sticks is narrow, it is difficult to tilt the sticks. Further, the sticks may impede a player from operating buttons. In particular, when operating a HOME button, a plus button, or a minus button, a player should press the button with a finger beyond the stick, and therefore, the player cannot press the button quickly. Further, since the two sticks are distant from L and R buttons, it is difficult to simultaneously operate the two sticks and the L and R buttons.

Therefore, an object of the present invention is to provide a two-handed game controller which is easy to operate.

### SOLUTION TO THE PROBLEMS

The above object is achieved by the following configuration examples, for example.

A configuration example is a game controller that transmits, to a predetermined game apparatus, an operation input performed by a user. The game controller includes: grips held with left and right hands of a player, respectively; an operation section provided on an outer surface of a housing of the game controller, the operation section causing the player holding the grips to perform an operation input; and a communication section that wirelessly communicates with the predetermined game apparatus. The operation section includes: a first stick that is provided at an upper left position in a front surface of the housing of the game controller, which position allows the player to operate the first stick with a thumb of his/her left hand when the player holds the grips; a second stick that is provided at an upper right position in the front surface of the housing of the game controller, which position allows the player to operate the second stick with a thumb of his/her right hand when the player holds the grips; a direction key that is provided at a position close to the center of the housing relative to the first stick on the front surface of the housing, which position allows the player to operate the direction key with the thumb of the left hand when the player holds the grips; a plurality of first type operation buttons that are provided at a position close to the center of the housing relative to the second stick on the front surface of the housing, which position allows the player to operate the first type operation buttons with the thumb of the right hand when the player holds the grips; one or more second type operation button(s) that is provided at a position close to the center of the housing relative to the first stick and the second stick on the front surface of the housing, and above the direction key and the plurality of first type operation buttons; a third type operation button that is provided at a position beneath the second type operation button(s) on the front surface of the housing, and between the direction key and the plurality of first type operation buttons; and a plurality of fourth type operation buttons provided at positions in the vicinity of left and right ends of an upper surface of the housing of the game controller, respectively, which positions allow the player to operate the fourth type operation buttons with his/her left and right index fingers, respectively, when the player holds the grips.

According to another configuration example, the direction key may be provided at a position to the right side of and beneath the first stick, which position allows the player to operate the direction key with the thumb of the left hand when the player holds the grips, and the plurality of first type operation buttons may be provided at a position to the left side of and beneath the second stick, which position allows the player to operate the first type operation buttons with the thumb of the right hand when the player holds the grips.

According to another configuration example, the second type operation button(s) may be used for system operation of the predetermined game apparatus, and the third type operation button may be used for power control of the game apparatus.

According to another configuration example, the game controller may further include a first light emitting section including a plurality of LEDs, which is positioned at the center and lower end of the front surface of the housing. The first light emitting section may turn on one of the plurality of LEDs in accordance with information that distinguishes the game controller from another game controller, when the game controller is connected to the predetermined game apparatus.

According to another configuration example, the game controller may further include a second light emitting section that is positioned substantially in the center of the front surface of the housing, and above the second type operation button(s). The second light emitting section may be used for indicating information relating to a battery stored in the game controller.

According to another configuration example, the game controller may further include a vibration section that generates vibration based on a control signal supplied from the predetermined game apparatus, the vibration section being provided inside the grips.

According to another configuration example, the vibration section may be provided inside the grip on the side where the direction key is provided.

According to another configuration example, at least one of the first stick and the second stick may be a push-button type analog stick that is pushed to be operated.

According to another configuration example, the game controller may be configured so that a predetermined battery is stored in a center area of a back surface of the housing, and a portion of the housing where the battery is stored is thinner than the grips, and flat.

### ADVANTAGEOUS EFFECTS OF THE INVENTION

According to the above configuration, it is possible to provide a game controller which is easy to operate.

### BRIEF DESCRIPTION OF THE DRAWINGS

[FIG. 1A] FIG. 1A is a diagram illustrating a left side view of a game controller.
[FIG. 1B] FIG. 1B is a diagram illustrating a front view of the game controller.
[FIG. 1C] FIG. 1C is a diagram illustrating a right side view of the game controller.
[FIG. 1D] FIG. 1D is a diagram illustrating a rear view of the game controller.
[FIG. 1E] FIG. 1E is a diagram illustrating a top view of the game controller.
[FIG. 1F] FIG. 1F is a diagram illustrating a bottom view of the game controller.
[FIG. 2] FIG. 2 is a diagram illustrating an example of operation.
[FIG. 3A] FIG. 3A is a top view illustrating an example of dimensions of the game controller.
[FIG. 3B] FIG. 3B is a front view illustrating an example of dimensions of the game controller.
[FIG. 3C] FIG. 3C is a bottom view illustrating a non-limiting example of dimensions of the game controller.
[FIG. 3D] FIG. 3D is a right side view illustrating a non-limiting example of dimensions of the game controller.

### DESCRIPTION OF EMBODIMENTS

Hereinafter, a game controller (hereinafter referred to simply as a controller) according to an embodiment of the present invention will be described. The controller according to the present embodiment includes a communication section capable of wireless communication, and is wirelessly connected to a predetermined information processing apparatus (e.g., a game apparatus) when it is used. Any communication standard may be adopted for the wireless communication. For example, a short-range wireless communication technology such as Bluetooth (registered trademark) or WiFi Direct is adopted.

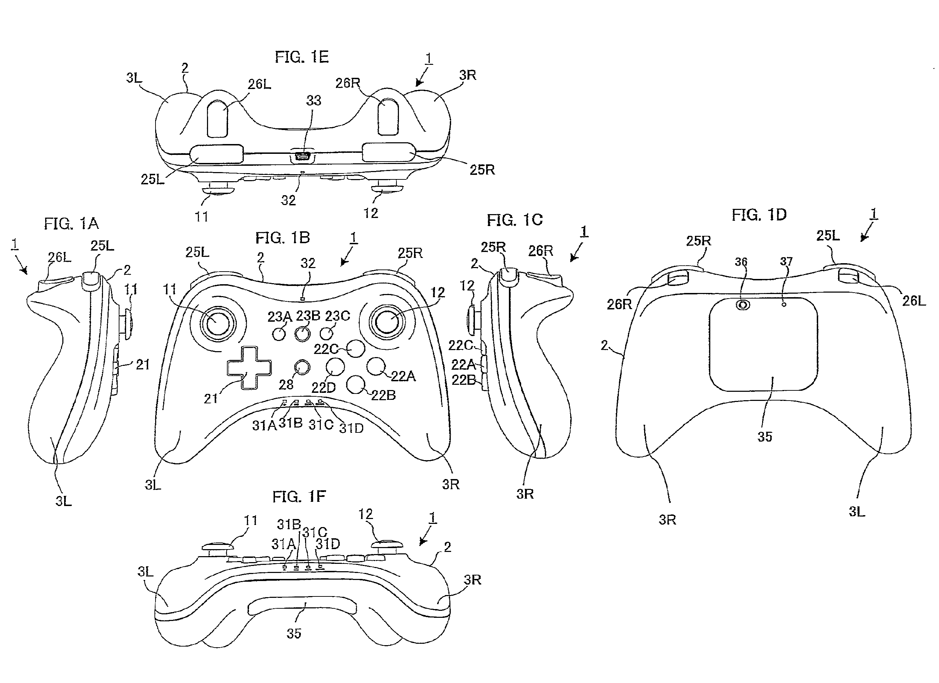

FIG. 1 illustrates an external view of a controller 1. FIG. 1A is a left side view of the controller 1, FIG. 1 B is a front view of the controller 1, FIG. 1C is a right side view of the controller 1, FIG. 1D is a rear view of the controller 1, FIG. 1E is a top view of the controller 1, and FIG. 1F is a bottom view of the controller 1. The controller 1 mainly includes: a housing 2 having left and right grips 3L and 3R (hereinafter also collectively referred to as grips 3); and an operation section that includes two analog sticks projecting from openings provided at a front surface of the housing 2, and a plurality of operation buttons (described later). The housing 2 of the present embodiment, when viewed from the front side thereof, has a gentle trapezoid shape with its left-right direction being a longitudinal direction. The housing 2 is a little recessed at its upper side, and is recessed more at its lower side than at the upper side. In other words, the housing 2 is shaped such that the grips 3L and 3R extend toward the bottom surface side (toward the player when he/she holds the controller). The front surface of the housing 2 is substantially flat except the portions where the analog sticks are provided. The portions where the analog sticks are provided are slightly raised. The grips 3L and 3R are shaped so as to gently curve from the front surface to the back surface. Note that the housing 2 of the present embodiment is formed by plastic molding, for example.

A first analog stick 11 (hereinafter referred to as a left stick) is provided on the left end of the front surface of the housing 2 and in the vicinity of the upper surface of the housing 2, and a second analog stick 12 (hereinafter referred to as a right stick) is provided on the right end of the front surface of the housing 2 and in the vicinity of the upper surface of the housing 2. More specifically, the left stick 11 is provided at a position that allows a player to operate the left stick 11 with a thumb of his/her left hand that holds the grip 3L (more preferably, a position on which the thumb of the left hand that holds the grip 3L is naturally put). The right stick 12 is provided at a position that allows the player to operate the right stick 12 with a thumb of his/her right hand that holds the grip 3R (more preferably, a position on which the thumb of the right hand that holds the grip 3R is naturally put). Each of the left stick 11 and the right stick 12 is a stick that can be tilted down to an arbitrary direction chosen from a 360° range, and is used by the player to give an instruction about an arbitrary direction. Further, each of the left stick 11 and the right stick 12 can be pushed toward the back surface. Thus, the left stick 11 and the right stick 12 also serve as push buttons. The left stick 11 and the right stick 12 act in accordance with a program executed by an information processing apparatus (e.g., a game apparatus) to which the controller is connected. Since the interval between the left stick 11 and the right stick 12 is increased as compared to the conventional controller, even when the player tilts down the left stick 11 and the right stick 12 toward the center of the housing 2, the interval between the left and right thumbs of the player is not narrow, which allows the player to perform operations easily.

A cross key (also referred to as a direction key) 21 is provided at a position to the left of the substantial center position on the front surface of the housing 2, and near the center position relative to the left stick 11, at which the player is allowed to operate the cross key with the thumb of the left hand that holds the grip 3L. Specifically, the cross key 21 is provided at a position to the right of and beneath the left stick 11. The cross key 21 is a cross-shaped four-direction push switch. The cross key 21 includes operation portions corresponding to the four directions (front, rear, right and left), which are respectively located on cross-shaped projecting portions arranged at intervals of 90 degrees. The player selects one of the front, rear, right, and left directions by pressing one of the operation portions of the cross key 21. The cross key 21 acts in accordance with a program executed by an information processing apparatus (e.g., a game apparatus) to which the controller is connected. The shape of the cross key 21 is not limited to that shown in FIG. 1B. The cross key 21 may have any shape as long as it allows the player to input the four directions. For example, the cross key 21 may have a shape of a round base with a protruding cross shape, or may be a set of four keys separated from each other.

Further, operation buttons 22A to 22D (hereinafter also referred to as a first operation button set) are positioned so as to form a cross shape, i.e., positioned rightward, downward, leftward, and upward, respectively, in an area to the right of the substantial center of the front surface of the housing 2, and near the center of the housing 2 relative to the right stick 12, at which the player is allowed to operate the operation buttons 22A to 22D with the thumb of the right hand that holds the grip 3R. More specifically, the operation buttons 22A to 22D are positioned so as to form a cross shape, i.e., positioned rightward, downward, leftward, and upward, respectively, in an area to the left of and beneath the right stick 12. The operation buttons 22A to 22D are appropriately assigned functions, respectively, in accordance with a program executed by the information processing apparatus to which the controller 1 is connected. For example, the operation buttons 22A to 22D are used for determination operation, cancellation operation, and the like.

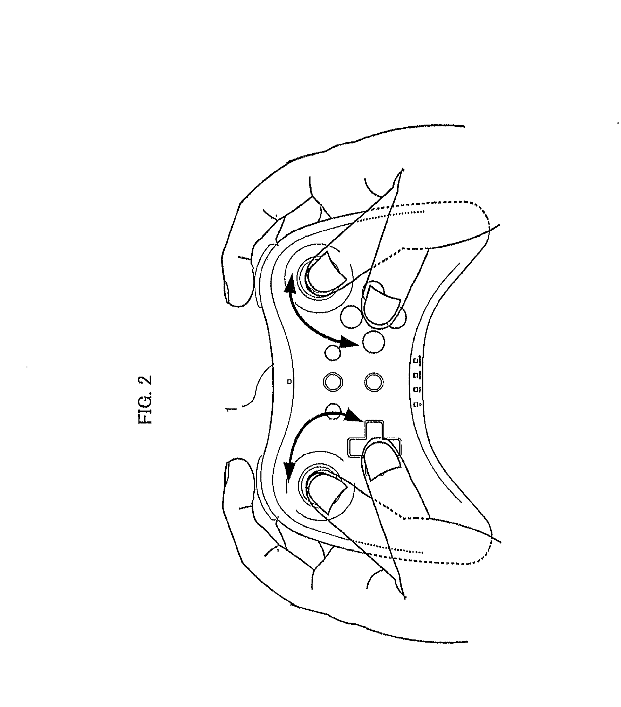

As described above, since the cross key 21 is positioned to the right of and beneath the left stick 11, the ball of the thumb of the left hand of the player reaches the position of the cross key 21 when the player moves the thumb with the base of the thumb being a fulcrum point, as shown in FIG. 2. In other words, the player is allowed to move the ball of the thumb to the position of the cross key 21 by only moving the thumb to the right with the base of the thumb being a fulcrum point, without particularly changing the position of holding the grip 3L. In addition, the player is allowed to return the thumb to the position of the left stick 11 by moving the thumb to the left. That is, the player is allowed to easily move the thumb between the left stick 11 and the cross key 21, thereby improving the operability. In other words, when the player operates the cross key 21, it is possible to avoid the situation that the stick is positioned between the tip of the thumb (the position of the cross-key) and the base of the thumb, and impedes the player's operation, which results in reduction in the operability.

Likewise, since the first operation button set (operation buttons 22A to 22D) is positioned to the left side of and beneath the right stick 12, the player is allowed to move the thumb of the right hand between the right stick 12 and the first operation button set by only moving the thumb with the base of the thumb being a fulcrum point. Thereby, the player is allowed to easily move the thumb between the right stick 12 and the first operation button set, and thus the operability is improved.

An L button 25L is provided at the left end of the upper surface of the housing 2 and near the front surface of the housing 2, and a ZL button 26L is provided beneath the L button 25L (near the back surface relative to the L button 25L). An R button 25R is provided at the right end of the upper surface of the housing 2 and near the front surface of the housing 2, and a ZR button 26R is provided beneath the R button 25R (near the back surface relative to the R button 25R). The L button 25L is provided at a position reached by an index finger of a left hand that holds the grip 3L, and the ZL button 26L is provided at a position reached by a middle finger and a ring finger of the left hand. The R button 25R is provided at a position reached by an index finger of a right hand that holds the grip 3R, and the ZR button 26R is provided at a position reached by a middle finger and a ring finger of the right hand. The L button 25L, the R button 25R, the ZL button 26L, and the ZR button 26R are appropriately assigned functions, respectively, in accordance with a program executed by the information processing apparatus.

Further, system operation buttons 23A to 23C are provided at a position in the center of the front surface of the housing 2, near the upper surface of the housing 2, and between the left stick 11 and the right stick 12. The system operation buttons 23A to 23C (hereinafter also referred to as a second operation button set) are assigned functions as a minus button, a home button, a plus button, and the like. These system operation buttons 23A to 23C are assigned operation functions, respectively, in accordance with a program executed by the information processing apparatus to which the controller 1 is connected. In the present embodiment, for example, operations to be directly controlled by the system of the game apparatus are assumed. For example, when the home button 23B is pressed, game processing, even if it is being executed, is stopped, and the screen is changed to the home screen. When the minus button 23A or the plus button 23C is pressed, the image displayed in the home screen is changed (paging or scrolling is performed). Since the left stick 11 and the right stick 12 are positioned near the both ends of the upper surface, respectively, a sufficient space is secured between the sticks, and a plurality of system operation buttons can be provided in the space such that the sticks do not impede the player from operating the system operation buttons.

Further, a power operation button 28 is provided at a position in the center of the front surface of the housing 2, near the bottom surface of the housing 2, and between the cross key 21 and the operation buttons 22A to 22D (first operation button set). In other words, the cross key 21 and the first button set are spaced apart from each other at a certain interval in the left-right direction (horizontal direction) in FIG. 1B, and the power operation button 28 is positioned between (in FIG. 1B, in the middle between) the cross key 21 and the first button set. The power operation button 28 is a power switch for remote-controlling the power of the information processing apparatus body to be on and off. The power operation button 28 has a top surface buried in the front surface of the housing 2 so as not to be inadvertently pressed by the player. Since the left stick 11 and the right stick 12 are positioned near the upper surface, the player need not move his/her fingers beyond the sticks when pressing the system operation buttons 23A to 23C or the power operation button 28, and thus the player can easily press the buttons.

Further, a plurality of indicators are provided on the front surface of the housing 2 and near the bottom surface relative to the power operation button 28. Specifically, LEDs 31A to 31D are provided. A plurality of controllers may be connected to the information processing apparatus to which the controller 1 is connected. A controller type (number) is assigned to the controller 1 such that the controller 1 is distinguishable from other controllers. The LEDs 31A to 31D are used for informing the player of the controller type that is currently set in the controller 1. The controller number is instructed from the information processing apparatus. Specifically, while the controller 1 is communicating with the information processing apparatus, one of the plurality of LEDs 31A to 31D is turned on in accordance with an instruction from the information processing apparatus. The LEDs 31A to 31D are provided between and beneath the cross key 21 and the operation buttons 22A to 22D, and the space between the cross key 21 and the operation buttons 22A to 22D is increased at the lower side due to the arrangement of the operation buttons 22A to 22D, and therefore, a sufficient space for providing the plurality of LEDs is secured at the lower side. Further, while there is a case where the player moves the fingers inward beyond the positions of the sticks when operating the sticks, it is rare that the player moves the fingers inward beyond the positions of the buttons when operating the buttons, and therefore, the plurality of LEDs are less likely to be covered with the fingers during the operation. Accordingly, the LEDs are highly visible during the operation.

Further, a charging indicator 32 is provided near the upper surface of the housing 2 relative to the second operation button set. The charging indicator 32 is used for informing the player of the remaining battery level of the controller 1, and the state of charge of the controller 1, for example. For example, the charging indicator 32 can inform the player of the state of charge by using colors of an LED. In contrast to the LEDs 31A to 31D, the charging indicator 32 of the present embodiment is solely provided in a broad area on the housing, which area is not likely to be covered with the player's hand during the operation, and therefore, is noticeable, which allows the player to easily find a change of the indicator, for example, a change in the color of the indicator. Accordingly, the player easily recognizes a reduction in the remaining battery level.

Further, as shown in FIG. 1E, a charging connector 33 is provided at a position in the center of the upper surface of the housing 2 and near the front surface of the housing 2. The charging connector 33 is, for example, a connector corresponding to a mini USB terminal, and is capable of charging the controller 1 when it is connected to a power supply by using a predetermined cable.

Further, as shown in FIG. 1D, on the back surface of the housing 2, a battery cover 35 is provided in a center area sandwiched between the left and right grips. A battery is stored inside the cover. Further, the center area of the housing 2 (hereinafter referred to as a battery storage area) is recessed relative to the left and right grips and the area where the ZL button 26L and the ZR button 26R are present (refer to FIGS. 1 A, 1C, 1E, and 1F). That is, the center area where the battery is stored is recessed, and only this area is reduced in thickness (in other words, only the grips 3L and 3R and the area where the ZL button 26L and the ZR button 26R are stored are raised). In the conventional art, since the sticks are positioned near the center of the housing, the thickness of the center portion of the housing is somewhat increased due to influence of the sizes of parts, and the like. In contrast, in the present embodiment, since the left stick 11 and the right stick 12 are provided outward when viewed from the back surface (near the both ends of the front surface), the thickness of the center area is reduced, which allows the player to easily hold the housing 2. Further, two small holes are opened in an upper end portion of the battery cover 35. In one of the holes (the left-side hole in FIG. 1D), a connect button 36 is provided, which is used for establishing wireless connection (pairing) between the controller 1 and the information processing apparatus. In the other hole (the right-side hole in FIG. 1D), a reset switch 37 for resetting the controller 1 is provided.

Further, a vibrator that generates vibration based on a control signal from the information processing apparatus may be provided inside the grips 3. Preferably, the vibrator is provided inside the grip 3L. In other words, it is preferable that the vibrator be included in the left stick 11 that is supposed to be used mainly for direction input operation, or in a grip on the side where the cross key 21 is present. When the player operates the controller 1 with his/her both hands, particularly when the player continuously operates the cross key 21, more force is applied to the left hand (the left hand holds the grip more tightly than the right hand). Therefore, it is considered that the controller 1 is more likely to be supported by the hand which mainly performs direction control, and vibration is more likely to be transmitted to the player when the vibrator is provided in the grip 3L.

In addition, a communication section for wireless communication with the information processing apparatus is also included in the housing 2.

Hereinafter, a description will be given of examples of intervals and dimensions of the above-described buttons and the like, as a specific example of arrangement of the buttons and the like. However, the intervals and dimensions described below are merely examples, and intervals and dimensions approximated to those described below are also within the scope of the present invention. Also when the relationships between the locations, intervals, and dimensions are represented as ratios, ratios approximated to the represented ratios are also within the scope of the present invention.

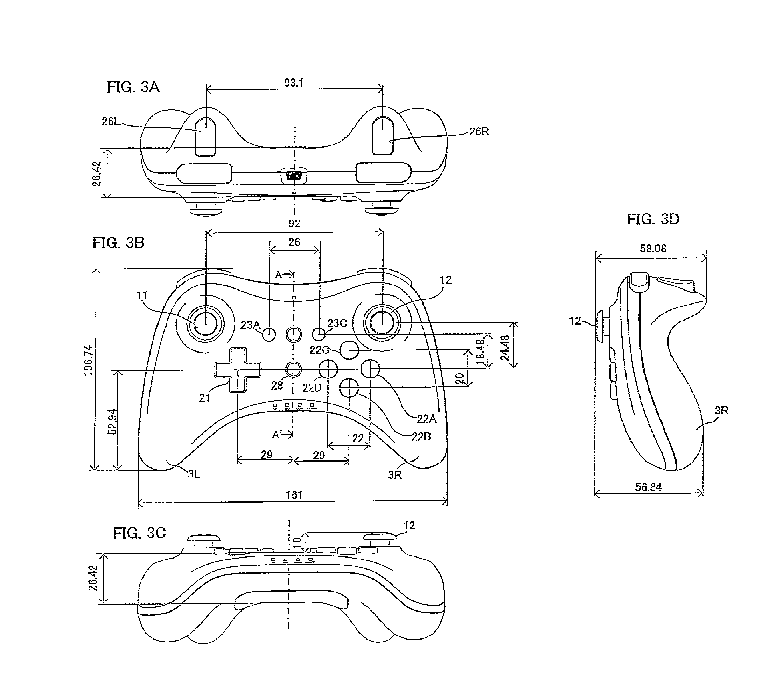

Note that FIG. 3A is a top view of the controller 1, FIG. 3B is a front view of the controller 1, FIG. 3C is a bottom view of the controller 1, and FIG. 3D is a right side view of the controller 1.

With reference to FIG. 3B, the interval in the horizontal direction between the most left end of the grip 3L and the most right end of the grip 3R when viewed from the front side is a length that allows the player to hold the grips 3L and 3R with both hands. Specifically, it is about 140 mm to 180 mm, and for example, 161 mm. The interval in the vertical direction between the lowermost end of the grip 3L and the uppermost end of the L button 25L is a length that allows the player to operate the L button 25L when holding the grip. Specifically, it is about 100 mm to 115 mm, and for example, 106.74 mm.

The interval in the horizontal direction between (the center of) the left stick 11 and (the center of) the right stick 12 is an interval that allows the player to easily operate the sticks with thumbs when holding the grips with both hands. In addition, the interval avoids the situation that the sticks impede the player from operating other buttons. Specifically, it is about 80 mm to 100 mm, and for example, 92 mm. Note that a middle point between the left stick 11 and the right stick 12 in the horizontal direction is substantially on a center line of the housing 2 in the horizontal direction (on a line that vertically passes a center point in the horizontal direction in FIG. 3B, more specifically, on a line that overlaps a line A-A' in FIG. 3B).

In FIG. 3B, the interval in the horizontal direction between the system operation buttons 23A and 23C is a length that prevents the buttons from being excessively close to the sticks. Specifically, it is about 20 mm to 30 mm, and for example, 26 mm. The system operation button 23B is positioned substantially on the center line of the housing 2 in the horizontal direction.

Further, in FIG. 3B, the power operation button 28 is positioned substantially on the center line of the housing 2 in the horizontal direction. The interval between the center of the cross key 21 and the center of the power operation button 28 is a length that allows the player to easily operate the power operation button 28 with a thumb when holding the grips. Specifically, it is about 20 mm to 40 mm, and for example, 29 mm. The interval in the horizontal direction between the power operation button 28 and the center of the first operation button set (a vertical line passing the center of the operation button 22B) is a length that allows the player to easily operate the power operation button 28 with a thumb when holding the grips. Specifically, it is about 20 mm to 40 mm, and for example, 29 mm. The center of the cross key 21, the center of the power operation button 28, and the center of the first operation button set substantially coincide with each other on the axis in the vertical direction.

Further, in FIG. 3B, the interval in the horizontal direction between the operation buttons 22D and 22A is about 15 mm to 30 mm, and for example, 22 mm. The interval in the vertical direction between the operation buttons 22C and 22B is about 14 mm to 28 mm, and for example, 20 mm. The interval in the vertical direction between the center of the right stick 12 and the center of the operation button 22A is a length that allows the player to operate them with a thumb. Specifically, it is about 20 mm to 30 mm, and for example, 24.48 mm. The interval in the vertical direction between the power operation button 28 and the center of the system operation button 23B is about 15 mm to 20 mm, and for example, 18.48 mm.

Further, in FIG. 3B, the interval in the vertical direction between the lowermost end of the grip 3L and the center of the cross key 21 is about 40 mm to 60 mm, and for example, 52.94 mm.

Further, as shown in FIG. 3A, a middle point between the ZL button 26L and the ZR button 26R in the horizontal direction is substantially on the center line of the housing 2 in the horizontal direction (on an alternate long and short dash line in FIG. 3A). A middle point between the L button 25L and the R button 25R is also substantially on the center line of the housing 2 in the horizontal direction. The L button 25L, the R button 25R, the ZL button 26L, and the ZR button 26R are arranged such that the positions thereof in the horizontal direction are close to the left stick 11 and the right stick 12, respectively. The interval in the horizontal direction between the center of the ZL button 26L and the center of the ZR button 26R is about 80 mm to 100 mm, and for example, 93.1 mm.

With reference to FIG. 3D, the interval in the depth direction between the upper end of the right stick 12 and the lowermost end of the grip 3R is a length that allows the player to easily hold the grip 3R with right hand. Specifically, it is about 44 mm to 65 mm, and for example, 56.84 mm. The interval between the upper end of the right stick 12 and the lowermost end of a projecting portion in which the ZR button 26R is stored is specifically about 44 mm to 65 mm, and for example, 58.08 mm.

Further, as shown in FIG. 3A and FIG. 3C, the thickness between the front surface to the back surface in the battery storage area (the thickness of a cross section taken along a line A-A' in FIG. 3B) is 26.42 mm. If the sticks are positioned close to the center, the thickness of the housing increases due to the sizes of the stick-related parts. In the above-described configuration, however, since the sticks are positioned close to the upper both ends of the housing, the thickness of the center portion of the housing is reduced. The center portion with the reduced thickness enhances the feeling of gripping. The height of the right stick 12 from the front surface is about 7 mm to 13 mm, and for example, 10 mm (the same is true for the left stick 11).

According to the above-described configuration, the two analog sticks are positioned in the upper right portion and the upper left portion of the housing 2, respectively, when the housing 2 is viewed from the front thereof, such that the player is allowed to operate the sticks with left and right thumbs when holding the grips 3L and 3R, respectively. Therefore, it is possible to secure a sufficient interval between the two sticks in the horizontal direction, thereby improving the operability of each analog stick.

Further, the cross key 21 and the first operation button set are positioned inside relative to the two analog sticks. Therefore, as compared to a controller in which a cross key (whose key top is lower than analog sticks) is positioned outside relative to the analog sticks (which are higher than the cross key), it is possible to avoid such a situation that the analog sticks that are higher than the cross key impede the player from operating the cross key. Thus, the operability is improved. The same can be said for the second operation button set. That is, since the second operation button set is positioned inside relative to the two analog sticks, the height of the analog sticks does not interfere with the player's fingers, which allows the player to easily operate these buttons.

Further, since the cross key 21 and the first operation button set are positioned with a certain interval between them, even if the left and right thumbs are put on the cross key 21 and the first operation button set, respectively, the thumbs are prevented from touching and interfering with each other, and thus the cross key 21 and the first operation button set are improved in operability. Further, as for movement of the left thumb between the left stick 11 and the cross key 21 and movement of the right thumb between the right stick 12 and the first operation button set, the player can move each thumb easily and naturally with the base of the thumb as a fulcrum point. Therefore, the player can easily operate them.

Further, since the parts of the analog sticks, each having a certain volume in the depth direction because of its configuration when provided on the housing 2, are located in the upper right position and the upper left position of the housing 2, respectively, it is possible to reduce the thickness of the battery storage area of the housing 2 (the area corresponding to the battery cover 35 when viewed from the back surface of the housing 2). As a result, when the player holds the grips 3L and 3R with both hands, there is no obstacle to fingers put on the back surface, which allows the player to easily hold the grips 3L and 3R. In addition, the weight balance of the entire controller is appropriately adjusted in view of ease for holding, which contributes to improvement of operability.

Further, the above-described arrangement of the two analog sticks causes the left stick 11 and the L button 25L to be positioned close to each other, and causes the right stick 12 and the R button 25R to be positioned close to each other. As a result, it is possible to improve the operability of operation of the L button 25L and the R button 25R by using left and right index fingers with thumbs being put on the analog sticks. For example, it is possible to improve the operability in a case where either of the analog sticks and either of the L and R buttons 25L and 25R are operated simultaneously.

Further, as described above, the left stick 11 and the right stick 12 also serve as push buttons. Since the two analog sticks are positioned such that, when the player holds the grips 3, thumbs of his/her both hands naturally touch the sticks, the player is allowed to push the analog sticks with the hands and fingers holding the grips 3 being in their natural positions, and moreover, the player is allowed to easily tilt the analog sticks in the natural positions.

### INDUSTRIAL APPLICABILITY

A game controller according to the present invention can improve operability, and is useful as a game controller or the like for various kinds of game apparatuses and personal computers.

### DESCRIPTION OF THE REFERENCE CHARACTERS

- 1: controller
- 2: housing
- 3L: grip (left)
- 3R: grip (right)
- 11: left stick
- 12: right stick
- 21: cross key
- 22A: operation button
- 22B: operation button
- 22C: operation button
- 22D: operation button
- 23A: minus button
- 23B: home button
- 23C: plus button
- 25L: L button
- 25R: R button
- 26L: ZL button
- 26R: ZR button
- 31A: LED
- 31B: LED
- 31C: LED
- 31D: LED
- 32: charging indicator
- 33: charging connector
- 35: battery cover
- 36: connect button
- 37: reset button

## Claims

1. A game controller that transmits, to a predetermined game apparatus, an operation input performed by a user, the game controller comprising:
grips held with left and right hands of a player, respectively;
an operation section provided on an outer surface of a housing of the game controller, the operation section causing the player holding the grips to perform an operation input; and
a communication section that wirelessly communicates with the predetermined game apparatus, wherein
the operation section comprises:
a first stick that is provided at an upper left position in a front surface of the housing of the game controller, which position allows the player to operate the first stick with a thumb of his/her left hand when the player holds the grips;
a second stick that is provided at an upper right position in the front surface of the housing of the game controller, which position allows the player to operate the second stick with a thumb of his/her right hand when the player holds the grips;
a direction key that is provided at a position close to the center of the housing relative to the first stick on the front surface of the housing, which position allows the player to operate the direction key with the thumb of the left hand when the player holds the grips;
a plurality of first type operation buttons that are provided at a position close to the center of the housing relative to the second stick on the front surface of the housing, which position allows the player to operate the first type operation buttons with the thumb of the right hand when the player holds the grips;
one or more second type operation button(s) that is provided at a position close to the center of the housing relative to the first stick and the second stick on the front surface of the housing, and above the direction key and the plurality of first type operation buttons;
a third type operation button that is provided at a position beneath the second type operation button(s) on the front surface of the housing, and between the direction key and the plurality of first type operation buttons; and
a plurality of fourth type operation buttons provided at positions in the vicinity of left and right ends of an upper surface of the housing of the game controller, respectively, which positions allow the player to operate the fourth type operation buttons with his/her left and right index fingers, respectively, when the player holds the grips,

2. The game controller according to claim 1, wherein
the direction key is provided at a position to the right side of and beneath the first stick, which position allows the player to operate the direction key with the thumb of the left hand when the player holds the grips, and
the plurality of first type operation buttons are provided at a position to the left side of and beneath the second stick, which position allows the player to operate the first type operation buttons with the thumb of the right hand when the player holds the grips.

3. The game controller according to claim 1 or 2, wherein
the second type operation button(s) is used for system operation of the predetermined game apparatus, and
the third type operation button is used for power control of the game apparatus.

4. The game controller according to any of claims 1 to 3, further comprising a first light emitting section including a plurality of LEDs, which is positioned at the center and lower end of the front surface of the housing, wherein
the first light emitting section turns on one of the plurality of LEDs in accordance with information that distinguishes the game controller from another game controller, when the game controller is connected to the predetermined game apparatus.

5. The game controller according to any of claims 1 to 4, further comprising a second light emitting section that is positioned substantially in the center of the front surface of the housing, and above the second type operation button(s), wherein
the second light emitting section is used for indicating information relating to a battery stored in the game controller.

6. The game controller according to any of claims 1 to 5, further comprising a vibration section that generates vibration based on a control signal supplied from the predetermined game apparatus, the vibration section being provided inside the grips.

7. The game controller according to claim 6, wherein
the vibration section is provided inside the grip on the side where the direction key is provided.

8. The game controller according to any of claims 1 to 7, wherein
at least one of the first stick and the second stick is a push-button type analog stick that is pushed to be operated.

9. The game controller according to any of claims 1 to 8, wherein
the game controller is configured so that a predetermined battery is stored in a center area of a back surface of the housing, and a portion of the housing where the battery is stored is thinner than the grips, and flat.
